# EUROPEAN PATENT SPECIFICATION

(11) **EP 1 677 029 B1**
(45) Date of publication and mention of the grant of the patent: **19.11.2008**
(21) Application number: 03754203.2
(22) Date of filing: 20.10.2003
(51) Int. Cl.: F16F 15/16, B30B 15/06, B23Q 1/50

(54) **BALANCER MECHANISM FOR ROTATING SHAFT**
AUSGLEICHSMECHANISMUS FÜR DREHWELLE
MECANISME DE BALANCIER POUR UN ARBRE ROTATIF

(43) Date of publication of application: 05.07.2006
(73) Proprietor: Pascal Engineering Corporation, Itami-shi Hyogo 664-8502 (JP)
(72) Inventor: MIYAZAWA, Hiroshi c/o Pascal Engineering Corporation, Itami-shi, Hyogo 664-8502 (JP); KITAURA, Ichiro c/o Pascal Engineering Corporation, Itami-shi, Hyogo 664-8502 (JP)
(74) Representative: Price, Nigel John King
(86) International application number: PCT/JP2003/013389
(87) International publication number: WO 2005/038292

(56) References cited:
- EP-A1- 1 083 364
- DE-A- 2 264 974
- JP-A- 2001 277 059
- US-A- 5 544 576
- US-A- 5 544 577

## Description

### TECHNICAL FIELD

The present invention relates to a balancer mechanism for reducing rotary moment acting on a rotary shaft rotatably supported by a shaft supporting member from members supported by the rotary shaft.

### BACKGROUND OF THE RELATED ART

Conventionally, some devices, such as indexers, crank presses, and robot arms have rotary shafts that are rotatably supported by shaft supporting members with members such as a table, a moving platen, and an arm being supported by the rotary shafts.

For example, an indexer is provided with a pair of rotary shafts fixed to a rotary table unit, which in turn are rotatably supported by shaft supporting members, the table unit being rotated when the rotary shafts are driven by an electric motor.

The table unit is provided with a turn table that is rotatable about an axis orthogonal to the axis of the rotary shafts and a driving mechanism thereof, with a work being detachably mounted on the turn table for machining.

Generally, an indexer receives works in a variety of shapes and size, making it difficult to align the rotation axis (the axis of the rotary shafts) of the table unit and the work mounted on the turn table with their gravity center. Therefore, the rotary shafts receive rotary moment (i.e. torque) caused by an offset load of the table unit and the work, increasing the load on the electric motor.

Hence, an attempt is made to provide a counter balance, for example, to the table unit so as to align the rotation axis of the table unit and the work with their gravity center. However, this is deteriorating the response on starting and stopping the rotation of the table unit and the work.

These problems are observed in a variety of devices in which the rotary shafts rotatably supported by shaft supporting members receive rotary moment from members supported by the rotary shafts, which, in addition to indexers, include crank presses and robot arms.

When the rotation axis of the table unit and the work is not aligned with their gravity center, the magnitude of rotary moment acting on the rotary shafts changes according to the rotation angle of the rotary shafts (i.e. rotation angle of the table unit and the work).

Japanese Laid-Open Patent Publication No. 2001-277059 discloses a rotary table provided with a pressurizing balancing mechanism. The pressurizing balancing mechanism uses a rotary shaft provided with an air operation chamber at the end, on the wall of which first and second pressure receiving surfaces are formed. An air supply member is inserted into the air operation chamber of the rotary shaft, and the first or second pressure receiving surface receives pressurized air supplied through the first or second port of the air supply member so that the rotary shaft receives rotary moment in the first or second rotation direction. Thus, a balancing rotary moment is generated that at least partly cancels the rotary moment caused by an offset load of the rotary table and the work.

However, in this rotary table an operation chamber has to be formed at the end of a rotary shaft, wherein the first and second pressure receiving surfaces are formed on the wall of the chamber, an air supply member are necessary, and the air supply member has to be introduced in the air operation chamber. Additionally, an air passage and a pressurized air supply device are necessary. Thus, the rotary table has a complex structure and increased production cost. Further, an air valve and a control device can be provided to control the pressure of the pressurized air supplied to the air operation chamber, for adjusting the balancing rotary moment in accordance with the rotary moment that changes according to the rotation angle, resulting in a more complex structure and increased production cost. Document US 5544576 discloses also a rotary shaft balancer mechanism comprising a gas spring.

The objects of the present invention are to reduce the rotary moment due to offset load in a simple and reliable manner by applying balancing rotary moment that at least partly cancels the rotary moment acting on the rotary shafts using a gas spring, to reduce the load on a driving mechanism for driving the rotary shafts, to improve the response on starting and stopping the rotation of members supported by the rotary shafts, to apply to the rotary shafts a balancing rotary moment of an appropriate magnitude, to simplify the structure, and to allow for easy mounting and applications in a variety of existing devices in which the rotary shafts receive rotary moment due to offset load from members supported by the rotary shafts.

### SUMMARY OF THE INVENTION

The present invention provides a rotary shaft balancer mechanism for reducing rotary moment acting on a rotary shaft rotatably supported by a shaft supporting member from one or more members supported by the rotary shaft, comprising a gas spring for applying a balancing rotary moment to the rotary shaft that at least partly cancels the rotary moment; a first coupler that rotatably couples one end of the gas spring to a stationary member on the shaft supporting member, and a second coupler that rotatably couples the other end of the gas spring either to an end of the rotary shaft or to a rotary member fixed to the end of the rotary shaft at a position offset to the axis of the rotary shaft.

The rotary shaft balancer mechanism can be applied to devices in which rotary shafts receive rotary moment from one or more members supported by the rotary shafts, such as rotary shafts rotatably supporting a table unit provided at an offset position relative to the axis of the rotary shafts and on which a work is detachably mounted in an indexer, the rotary shafts being rotatably supporting the crank shaft of a crank mechanism that vertically reciprocates a moving platen in a crank press, and the rotary shaft rotatably supporting a robot arm.

In the rotary shaft balancer mechanism, one end of the gas spring is rotatably coupled to a stationary member on the shaft supporting member by means of a first coupler and the other end of the gas spring is rotatably coupled either to the end of the rotary shaft or to a rotary member fixed to the end of the rotary shaft at a position offset to the axis of the rotary shaft by means of a second coupler. One end (the first coupler) of the gas spring is resiliently biased relative to the other end (the second coupler) by pressurized gas. When the rotation axis of the second coupler is not on the line passing through the rotation axis of the rotary shaft and the first coupler, the gas spring applies a balancing rotary moment to the rotary shaft that at least partly cancels the rotary moment, thereby reducing the rotary moment.

As described above, the gas spring is used to apply a balancing rotary moment to the rotary shaft that at least partly cancels the rotary moment, reducing the rotary moment in a simple and reliable manner and, therefore, reducing the load on the driving mechanism that drives the rotary shaft and improving the response on starting and stopping the rotation of the members supported by the rotary shaft. The balancer mechanism has a simple structure having a gas spring and first and second couplers, advantageous from the standpoint of production cost, and is versatile in that it can be easily mounted in a variety of existing devices in which the rotary shafts receive rotary moment from members supported by the rotary shafts.

The rotary moment changes in magnitude according to the rotation angle of the rotary shaft, and the position of the second coupler and the orientation of the gas spring change according to the rotation angle of the rotary shaft, changing the input position and direction of the force applied to the rotary shaft by the gas spring. Therefore, the gas spring applies a balancing rotary moment (i.e. torque) to the rotary shaft of an appropriate magnitude for the rotary moment with the direction from the axis of the rotary shaft to the gravity center of members supported by the rotary shaft being nearly aligned with the direction from the axis of the rotary shaft to the rotation axis of the second coupler.

Preferable practicable structures of the rotary shaft balancer mechanism are described hereinafter.

The axis of the rotary shaft, the rotation axis of the first coupler, and the rotation axis of the second coupler are parallel, with both ends of the gas spring being coupled to the stationary member and to the end of the rotary shaft or the rotary member by means of the first and second couplers, respectively. This allows the rotary shaft to rotate smoothly and allows the gas spring to reliably apply a balancing rotary moment on the rotary shaft.

The second coupler has a coupling shaft protruding from the end of the rotary shaft or the rotary member in parallel with the axial of the rotary shaft, with the other end of the gas spring being rotatably supported by the rotary shaft or by the rotary member via the coupling shaft. When the rotary shaft (the second coupler) is rotated, the other end of the gas spring does not interfere with the rotary shaft or the rotary member.

A coupling arm is provided that is equipped with a gas spring and is expandable and contractable via the gas spring, one end of which is rotatably coupled to a stationary member on the shaft supporting member by means of a first coupler and the other end of the coupling arm is rotatably coupled either to the end of the rotary shaft or to a rotary member fixed to the end of the rotary shaft at a position offset to the axis of the rotary shaft by means of a second coupler. In this manner, a gas spring is installed and reliably applies balancing rotary moment without enlarging the gas spring more than necessary.

### BRIEF DESCRIPTION OF THE DRAWINGS

Fig.1 is a front view of an indexer provided with a balancer mechanism according to an embodiment of the present invention.

Fig.2 is a side view of the balancer mechanism.

Fig.3 is a cross-sectional view at III-III line in Fig.2.

Fig.4 is a side view of the balancer mechanism with the rotary shaft at a rotation angle of approximately 80 degrees.

Fig.5 is a vertical cross-sectional view of the balancer mechanism with the rotary shaft at a rotation angle of 180 degrees.

Fig.6 is an illustration which explains the balancing rotary moment applied to the rotary shaft.

Fig.7 is a table showing balancing rotary moment applied to the rotary shaft according to the rotation angle of the rotary shaft.

Fig.8 is a vertical cross-sectional view of a balancer mechanism according to a modified embodiment.

Fig.9 is a vertical cross-sectional view of a balancer mechanism according to another modified embodiment.

Fig. 10 is a side view of a balancer mechanism according to yet another modified embodiment.

### DETAILED DESCRIPTION OF THE PREFERRED EMBODIMENTS

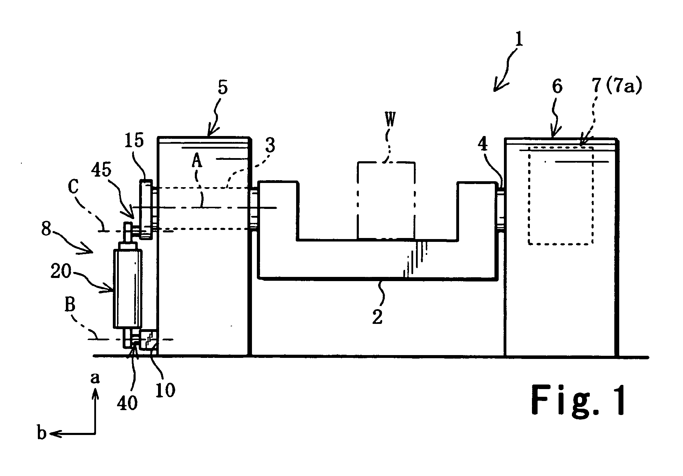

An embodiment of the present invention is described, in which the rotary shaft balancer mechanism of the present invention is applied to an indexer on which a work is detachably mounted for machining using a machining tool. In Fig.1, arrows a and b indicate to the top and to the left, respectively.

As shown in Fig. 1, an indexer 1 comprises a table 2, a pair of right and left rotary shafts 3 and 4 fixed to the table 2, a left shaft supporting mechanism 5 having a shaft support that rotatably supports the rotary shaft 3, a right shaft supporting mechanism 6 having a shaft support that rotatably supports the rotary shaft 4, a rotation driving mechanism 7 having an electric motor 7a that rotates the table 2 and rotary shafts 3 and 4 about the axis A of the rotary shafts 3 and 4, and a rotary shaft balancer mechanism 8 of the present invention (hereafter termed the balancer mechanism 8).

The rotation driving mechanism 7 is provided near the right shaft supporting mechanism 6. A driving force is supplied from the rotation driving mechanism 7 to the rotary shaft 4 and the table 2 is rotated, the table 2 is provided with a turn table that is rotatable about an axis orthogonal to the axis A of the rotary shafts 3 and 4 and a driving mechanism thereof (not shown). A work W is detachably mounted on the turn table for machining.

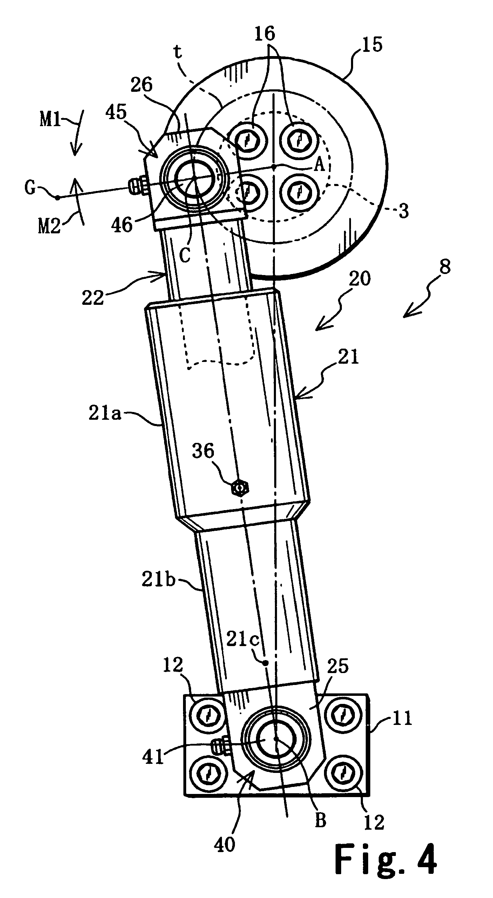

As shown in Fig. 1, 2 and 4, when the gravity center G of the table 2 and the work W mounted on the table 2 does not coincide with the axis A of the rotary shafts 3 and 4, the rotary shafts 3 and 4 are subject to rotary moment (i.e. torque) M1 caused by the offset load of the table 2 and the work W.

The balancer mechanism 8 is a mechanism to reduce the rotary moment M1 that the rotary shafts 3 and 4 rotatably supported by the shaft supporting members 5 and 6 receive from one or more members supported by the rotary shafts 3 and 4 (the table 2 and the work W).

The balancer mechanism 8 is described in detail hereafter.

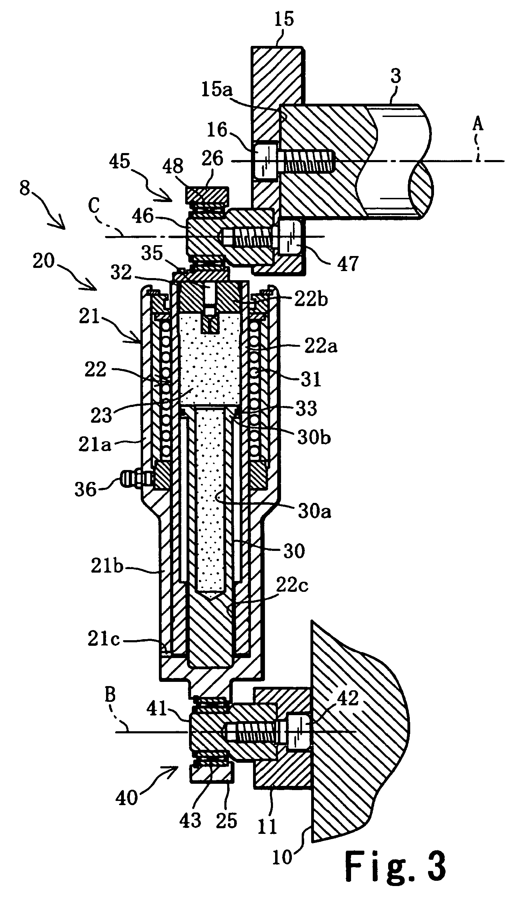

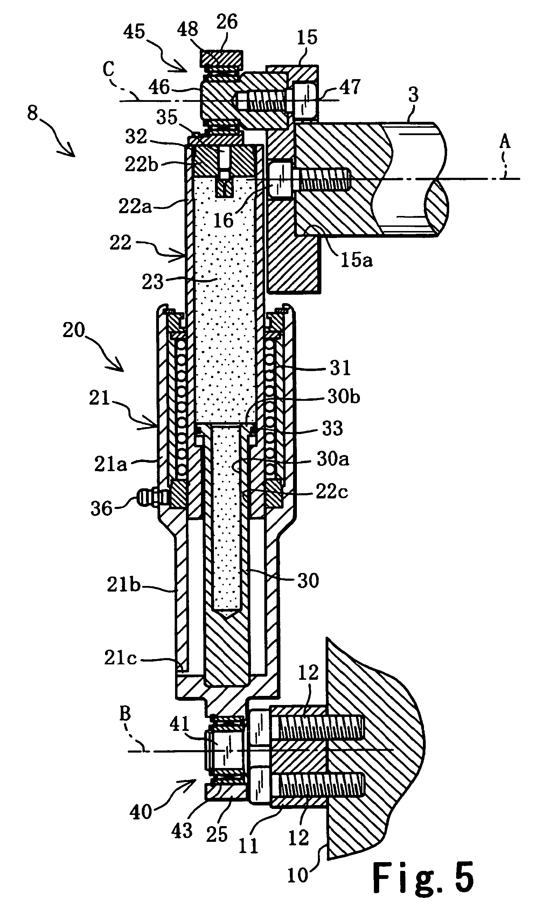

As shown in Figs. 1 to 5, the balancer mechanism 8 comprises a gas spring 20, a first coupler 40 that rotatably couples one end (the bottom end) of the gas spring 20 to a stationary member 10 such as a frame on the shaft supporting mechanism 5, and a second coupler 45 that rotatably couples the other end (the top end) of the gas spring 20 to a rotary member 15 fixed to the left end of the rotary shaft 5 at a position offset to the axis A of the rotary shaft 3 wherein the axis A of the rotary shaft 3, the rotation axis B of the first coupler 40, and the rotation axis C of the second coupler 45 are parallel.

The left end of the rotary shaft 3 protrudes from the left side of the shaft supporting mechanism 5. The rotary member 15 consists of a disc member with its center on the axis A of the rotary shaft 3. The left end of the rotary shaft 3 is fitted into a fitting hole 15a of the rotary member 15 and fastened by multiple bolts 16.

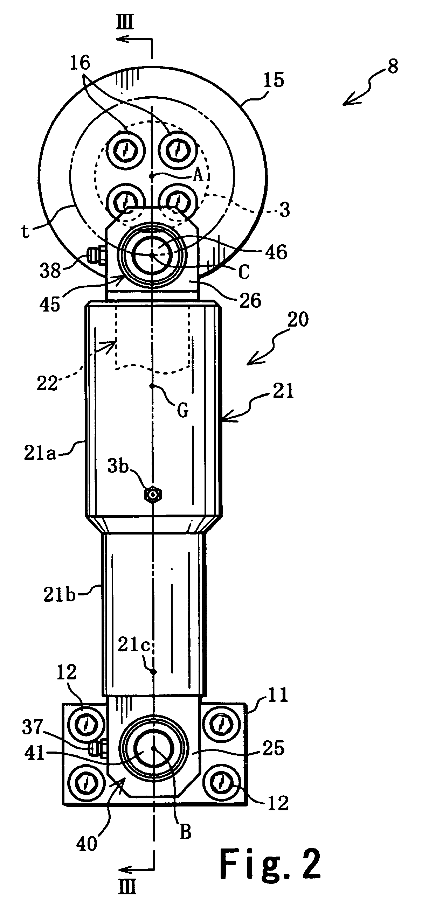

As shown in Figs. 2 to 5, the gas spring 20 is provided with a cylinder member 21, a cylindrical power output member 22 retractably installed in the cylinder member 21, and a gas operation chamber 23 formed within the cylinder member 21. The gas operation chamber 23 is filled with pressurized gas and the power output member 22 is resiliently biased by the pressurized gas nearly upward relative to the cylinder member 21.

The cylinder member 21 has a large-diameter barrel 21 a at the top and a small-diameter barrel 21 b at the bottom, with a bracket 25 being provided at the bottom end of the cylinder member 21. A rod 30 having a length approximately 2/3 of the cylinder member 21 is placed in the cylinder member 21, the bottom of the rod 30 being fixed to the bottom end wall of the cylinder member 21. The rod 30 is provided with a pressurized gas charge pit 30a formed from the top and a flange 30b at the top.

The power output member 22 is provided with a barrel 22a and an end wall 22b fitted in the top of the barrel 22a and fixed thereto. A bracket 26 is provided at the top end of the power output member 22. An insert hole 22c is formed in the barrel 22a of the power output member 22 at the bottom, with the rod 30 being slidably inserted into the insert hole 22c. Flange 30b of the rod 30 is slidably fitted into the barrel 22a, with a sealing member 32 being provided between the barrel 22a and the end wall 22b and a sealing member 33 being provided between the barrel 22a and the flange 30b.

The power output member 22 is supported so as to expand and contract by the large-diameter barrel 21a of the cylinder member 21 via a direct-acting ball bearing 31. The lower part of the power output member 22 is slidably fitted into the small-diameter barrel 21b of the cylinder member 21. A breathing hole 21c for taking air in and out of the space enclosed by the cylinder member 21, a power output member 22, and a rod 30 is formed in the cylinder member 21 below the power output member 22.

The gas operation chamber 23 is formed by the pressurized gas charge pit 30a and the space enclosed by the cylinder member 21 and rod 30 above the pressurized gas charge pit 30a. The end wall 22b of the power output member 22 is provided with a check valve 35 for charging pressurized gas in the gas operation chamber 23. The cylinder member 21 is provided with a grease nipple 36 for pouring grease into the ball bearing 31.

The first coupler 40 has a coupling shaft 41 protruding to the left of the stationary member 10. The bracket 25 at the bottom of the gas spring 20 is rotatably supported by the stationary member 10 via the coupling shaft 41. A block member 11 is fixed to the stationary member 10 by multiple bolts 12. Protruding to the left, the coupling shaft 41 is fixed to the block member 11 by a bolt 42. The bracket 25 is fitted on and is rotatably supported by the coupling shaft 41 via a bearing 43. The bracket 25 is provided with a grease nipple 37 for inserting grease into the bearing 43.

The second coupler 45 has a coupling shaft 46 protruding from the rotary member 15 fixed to the left end of the rotary shaft 3 in parallel with the axis of the rotary shaft 3 to the left. A bracket 26 at the top of the gas spring 20 is rotatably supported by the rotary member 15 via a coupling shaft 46. Protruding to the left, the coupling shaft 46 is fixed by a bolt 47 to the rotary member 15 at a position offset to the axis A of the rotary shaft 3. The bracket 26 is fitted on and is rotatably supported by the coupling shaft 46 via a bearing 48. The bracket 26 is provided with a grease nipple 38 for inserting grease into the bearing 48.

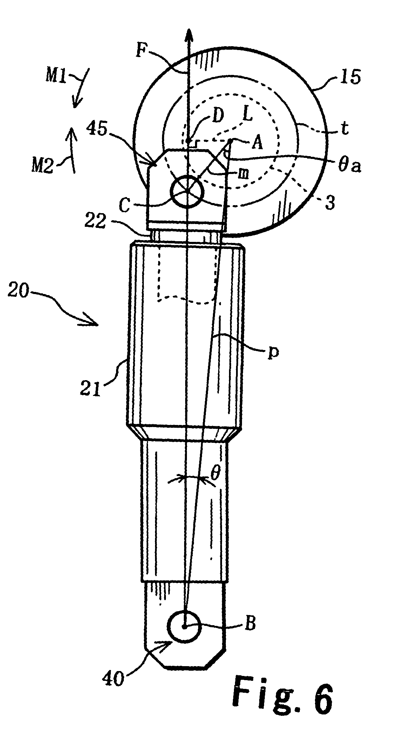

The balancing rotary moment M2 applied to the rotary shaft 3 is described hereafter with reference to Fig.6. It is given that p is the distance between the axes A and B, m is the distance between the axes A and C (an offset distance of the axis C to the axis A), θ is an angle of □ABC, and F is a biasing force of the gas spring 20.

As shown in Fig.6, in a vertical plane orthogonal to the axis A, the locus of the axis C when the rotary member 15 is rotated is a circle t. When m: p is 1:8, θ varies between 0 and approximately 8 degrees. Assuming the rotation angle θₐ of the rotary shaft 3 to be 0 degrees when the axis C is at the lowest position as shown in Fig.2, θ has the minimum angle of 0 degrees when the rotation angle θₐ of the rotary shaft 3 is 0 or 180 degrees and 8 has the maximum angle of approximately 8 degrees when the rotation angle θₐ of the rotary shaft 3 is 90 or 270 degrees.

The gas spring 20 applies a nearly upward force F to the rotary member 15 in the longitudinal direction of the gas spring 20.

The distance L between A and D serves as a lever for the force F. A balancing rotary moment M2 = F × L = F × p × sin θ is applied to the rotary shaft 3.

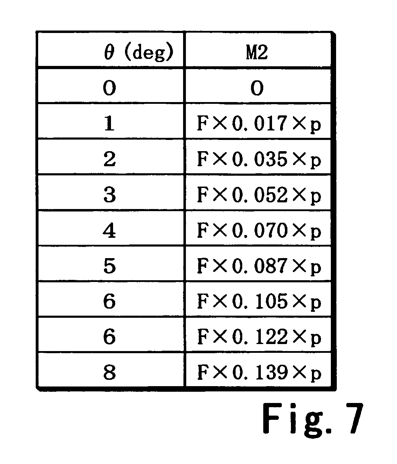

Fig.7 shows the values of M2 as θ is changed from 0 to 8 degrees by 1 degree. The balancing rotary moment M2 is increased as θ is increased from 0 to approximately 8 degrees.

The function and advantages of the balancer mechanism 8 are described hereafter. The rotary shaft balancer mechanism 8 uses the gas spring 20. The bottom end of the cylinder member 21 of the gas spring 20 is rotatably coupled to the stationary member 10 on the shaft supporting mechanism 5 by means of the first coupler 40. The top end of the power output member 22 of the gas spring 20 is rotatably coupled to the rotary member 15 fixed to the left end of the rotary shaft 3 at a position offset to the axis A of the rotary shaft 3 by means of the second coupler 45. The top end (the second coupler 45) of the gas spring 20 is resiliently biased nearly upward relative to the bottom end (the first coupler 40) by pressurized gas.

When the rotary shaft 3 and rotary member 15 are rotated, the power output member 22 is extended/retracted relative to the cylinder member 21 of the gas spring 20, whereby the gas spring 20 is tilted back and forth and oriented differently. When the rotation axis C of the second coupler 45 is not on the line passing through the axis A of the rotary shaft 3 and the rotation axis B of the first coupler 40, the gas spring 20 applies a balancing rotary moment M2 to the rotary shaft 3 that at least partly cancels the rotary moment M1.

In this instance, the direction from the axis A of the rotary shaft 3 to the gravity center G of the members supported by the rotary shaft 3 (the table 2 and the work W) is nearly aligned with the direction from the axis A of the rotary shaft 3 to the rotation axis C of the second coupler 45.

The rotary moment M1 applied to the rotary shaft 3 changes according to the rotation angle θₐ of the rotary shaft 3. When the rotary moment M1 has the maximum value Mo, the rotary moment M1 has a magnitude of |Mo sin θₐ|. When the rotation angle θₐ of the rotary shaft 3 is 90 degrees or 270 degrees, the rotary moment M1 is maximized and so is the balancing rotary moment M2.

Consequently, the rotary moment M1 is increased and so is the balancing rotary moment M2 as the rotation angle θₐ of the rotary shaft 3 is increased. On the other hand, the rotary moment M1 is decreased and so is the balancing rotary moment M2 as the rotation angle θₐ of the rotary shaft 3 is decreased.

As described above, the balancer mechanism 8 can apply a balancing rotary moment M2 to the rotary shaft 3 that at least partly cancels the rotary moment M1 by means of the gas spring 20, thereby reducing the rotary moment M1 in a simple and reliable manner and, therefore, reducing the load on the rotation driving mechanism 7 that drives the rotary shaft 4 and improving the response on starting and stopping the rotation of the table 2 and the work W supported by the rotary shafts 3 and 4.

Further, the balancer mechanism 8 has a simple structure, being provided with a gas spring 20 and first and second couplers 40 and 45, advantageous in terms of production cost. The balancer mechanism 8 is versatile in that it can be easily mounted on a variety of existing devices in which rotary shafts receive rotary moment from members supported by the rotary shafts. The rotary moment M1 changes in magnitude according to the rotation angle θₐ of the rotary shaft 3. The position of the second coupler 45 and the orientation of the gas spring 20 change according to the rotation angle θₐ of the rotary shaft 3, changing the input position and direction of the force applied to the rotary shaft 3 by the gas spring 20. Therefore, the gas sprig 20 can reliably apply a balancing rotary moment M2 of an appropriate magnitude to the rotary shaft 3 for the rotary moment M1.

The axis A of the rotary shaft 3, the rotation axis B of the first coupler 40, and the rotation axis C of the second coupler 45 are parallel. Therefore, the rotary shaft 3 can be smoothly rotated with the gas spring 20 being coupled at both ends to the stationary member 10 and the rotary member 15 by means of the first and second couplers 40 and 45, allowing the gas spring 20 to reliably apply a balancing rotary moment M2 to the rotary shaft 3.

The second coupler 45 has the coupling shaft 46 protrude from the rotary member 15 in parallel with the axis of the rotary shaft 3 to the left, the top end of the gas spring 20 being rotatably supported by the rotary member 15 via the coupler 46. Thus, the top end of the gas spring 20 does not interfere with the rotary shaft 3 or the rotary member 15 when the rotary shaft 3 (the second coupler 45) is rotated.

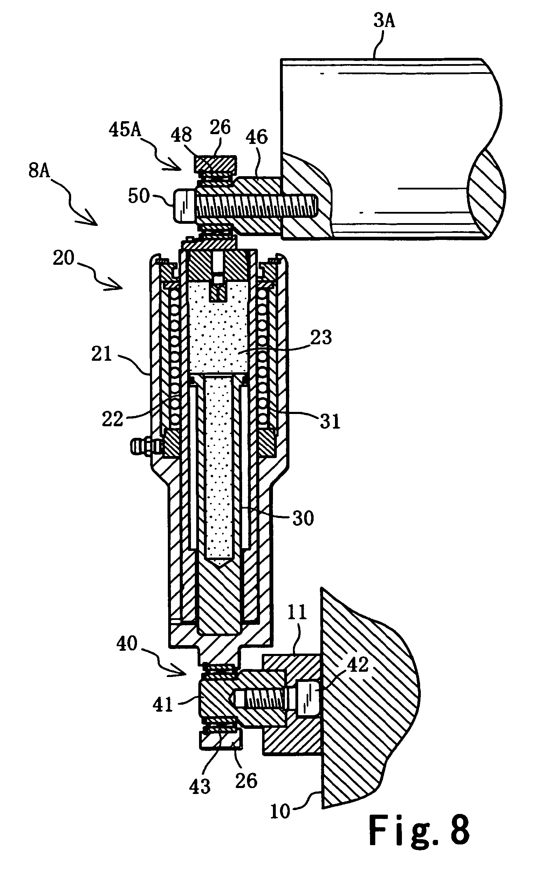

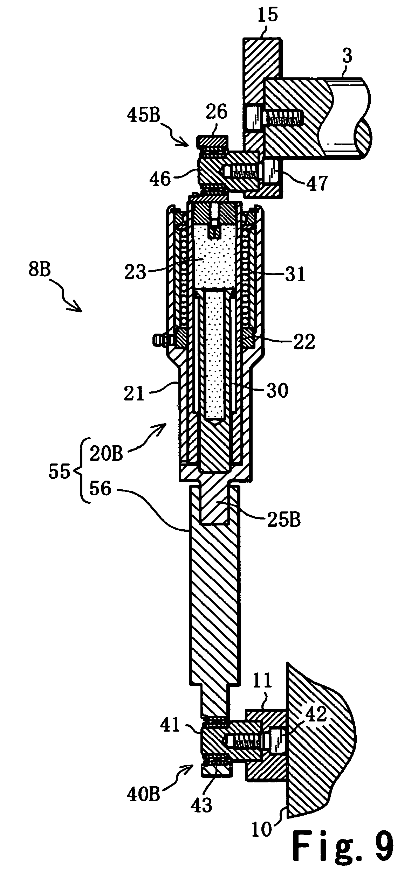

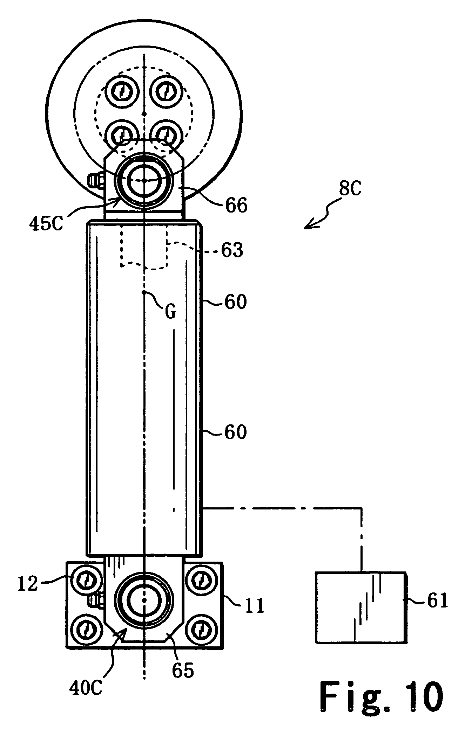

Modified embodiments in which the above embodiment is partly modified are described hereafter. Basically the same components as in the above embodiment are given the same reference numbers and their explanation is omitted.
(1) As shown in Fig.8, a balancer mechanism 8A is provided with a second coupler 45A with which the top end of the gas spring 20 is rotatably coupled to the left end of a rotary shaft 3A at a position offset to the axis A of the rotary shaft 3A. Protruding to the left, the coupling shaft 46 is fixed by a bolt 50 to the left end of the rotary shaft 3A at an position offet to the axis A of the rotary shaft 3. The bracket 26 of the gas spring 20 is fitted on and rotatably supported by the coupling shaft 46 via the bearing 48.
(2) As shown in Fig.9, a balancer mechanism 8B comprises a gas spring 20B, a coupling arm 55 consisting of a gas spring 20B and an arm 56 and is expandable and contractable via the gas spring 20B, a first coupler 40B that rotatably couples the bottom end of the coupling arm 55 to the stationary member 10 on the shaft supporting mechanism 5, and a second coupler 45B that rotatably couples the top end of the coupling arm 55 to the rotary member 15 fixed to the left end of the rotary shaft 3 at a position offset to the axis A of the rotary shaft 3. The top end of the arm 56 is immovably coupled to a bracket 25B at the bottom of the gas spring 20 and the bottom end of the arm 56 is coupled to the stationary member 10 by means of the first coupler 40B. The top end of the gas spring 20 is coupled to the rotary member 15 by means of the second coupler 45B.
   The balancer mechanism 8B allows the gas spring 20B to be reliably mounted without enlarging the gas spring 20B more than necessary and the mounted gas spring 20B reliably applies a balancing rotary moment M2 to the rotary shaft 3.
   As shown in Fig.9, the top end of the coupling arm 55 can be rotatably coupled to the rotary shaft 3 at a position offset to the axis A by means of the second coupler 45B. Alternatively, the coupling arm 55 can be formed by an arm immovably coupled to the top end of the gas spring 20 or a pair of arms immovably coupled to the top and bottom ends of the gas spring 20.
(3) As shown in Fig. 10, balancer mechanism 8C comprises a hydraulic cylinder 60 in place of the gas spring 20. The hydraulic cylinder 60 is provided with an accumulator 61 that supplies a nearly fixed oil pressure to the hydraulic cylinder 60. A bracket 65 provided at the bottom of a cylinder member 62 of the hydraulic cylinder 60 is rotatably coupled to the stationary member 10 by means of a first coupler 40C. A bracket 66 provided at the top of a piston rod 63 of the hydraulic cylinder 60 is rotatably coupled to the rotary member 15 at a position offset to the axis A of the rotary shaft 3 by means of a second coupler 45C. Having the same function as the gas spring 20, the hydraulic cylinder 60 and accumulator 61 apply a balancing rotary moment M2 to the rotary shaft 3 that at least partly cancels the rotary moment M1.
   As shown in Fig.8, the top end of the hydraulic cylinder 60 may be rotatably coupled to the rotary shaft 3 at a position offset to the axis A by means of the second coupler. Alternatively, as shown in Fig.9, a coupling arm having the hydraulic cylinder 60 may be provided, the bottom end of the coupling arm being rotatably coupled to the stationary member 10 by means of the first coupler and the top end of the coupling arm being rotatably coupled to the rotary shaft 3 or the rotary member 15 at a position offset to the axis A.
(4) The gas spring 20 or hydraulic cylinder 60 can be appropriately modified in terms of mounting position and orientation. For example, the gas spring 20 or hydraulic cylinder 60 can be horizontally mounted on the side of the rotary shaft 3 or the rotary member 15. The gas spring 20 or hydraulic cylinder 60 can be mounted downward above the rotary shaft 3 or the rotary member 15.
(5) A pair of balancer mechanisms 8 to 8C can be provided to a pair of rotary shafts 3 and 4, whereby balancing rotary moment (i.e. torque) are applied to the rotary shafts 3 and 4.
(6) Multiple balancer mechanism 8 to 8C can be provided to each of the rotary shafts 3 and 4.
(7) The resilient biasing force of the gas spring 20, or the gas pressure within the gas spring 20, can be made adjustable. In such a case, a gas pressure adjusting means comprising a pressure control valve and its control device will be provided for automatically adjusting the gas pressure according to the magnitude of rotary moment M1.
(8) The above balancer mechanism 8 to 8C can be applied to a variety of devices having rotary shafts that receive rotary moment from members supported by the rotary shafts, such as the rotary shafts rotatably supporting the crank shaft of a crank mechanism that vertically reciprocates a moving platen in a crank press and the rotary shaft rotatably supporting a robot arm, besides the indexer 1.

## Claims

1. A rotary shaft balancer mechanism for reducing rotary moment acting on a rotary shaft (3) rotatably supported by a shaft supporting member from one or more members supported by the rotary shaft, comprising:
a gas spring (20) for applying to the rotary shaft a balancing rotary moment that at least partly cancels the rotary moment;
a first coupler (40) that rotatably couples one end of the gas spring to a stationary member (10) on the shaft supporting member; and
a second coupler (45) that rotatably couples the other end of the gas spring either to an end of the rotary shaft or to a rotary member fixed to the end of the rotary shaft at a position offset to an axis of the rotary shaft.

2. The rotary shaft balancer mechanism according to claim 1 **characterized by** the fact that the axis of the rotary shaft, the rotary axis of the first coupler, and the rotary axis of the second coupler are parallel.

3. The rotary shaft balancer mechanism according to claim 2 **characterized by** the fact that the second coupler is provided with a coupling shaft protruding from the end of the rotary shaft or the rotary member in parallel with the axial of the rotary shaft and the other end of the gas spring is rotatably coupled by the rotary shaft or by the rotary member via the coupling shaft.

4. The rotary shaft balancer mechanism according to any of claims 1 to 3 **characterized by** the fact that the rotary shaft is a rotary shaft rotatably supporting a table unit provided at a position offset to the axis of the rotary shaft and on which a work is detachably mounted in an indexer.

5. A rotary shaft balancer mechanism (8) for reducing rotary moment acting on a rotary shaft (3) rotatably supported by a shaft supporting member from one or more members supported by the rotary shaft, comprising:
a gas spring (20) for applying a balancing rotary moment to the rotary shaft that at least partly cancels the rotary moment;
a coupling arm (56) that has the gas spring and is expandable and contractable via the gas spring;
a first coupler (40) that rotatably couples one end of the coupling arm to a stationary member (10) on the shaft supporting member; and
a second coupler (45) that rotatably couples the other end of the coupling arm either to an end of the rotary shaft or to a rotary member fixed to the end of the rotary shaft at a position offset to the axis of the rotary shaft.

## Patentansprüche

1. Drehwellen-Ausgleichsmechanismus (8) zum Verringern des auf eine durch ein Wellenlagerungselement drehbar gelagerte Drehwelle (3) von einem oder mehreren durch die Drehwelle gelagerten Elemente wirkenden Drehmoments, welcher umfasst:
eine Gasfeder (20) zum Anlegen eines ausgleichenden Drehmoments an der Drehwelle, das mindestens teilweise das Drehmoment aufhebt;
ein erstes Verbindungsstück (40), das ein Ende der Gasfeder mit einem feststehenden Element (10) an dem Wellenlagerungselement drehbar verbindet; und
ein zweites Verbindungsstück (45), das das andere Ende der Gasfeder entweder mit einem Ende der Drehwelle oder mit einem Drehelement drehbar verbindet, das an dem Ende der Drehwelle an einer zu einer Achse der Drehwelle versetzten Position befestigt ist.

2. Drehwellen-Ausgleichsmechanismus nach Anspruch 1, **dadurch gekennzeichnet, dass** die Achse der Drehwelle, die Drehachse des ersten Verbindungsstücks und die Drehachse des zweiten Verbindungsstücks parallel sind.

3. Drehwellen-Ausgleichsmechanismus nach Anspruch 2, **dadurch gekennzeichnet, dass** das zweite Verbindungsstück mit einer Kupplungswelle versehen ist, die von dem Ende der Drehwelle oder dem Drehelement parallel zur der Achse der Drehwelle ragt, und das andere Ende der Gasfeder durch die Drehwelle oder durch das Drehelement mittels der Kupplungswelle drehbar verbunden ist.

4. Drehwellen-Ausgleichsmechanismus nach einem der Ansprüche 1 bis 3, **dadurch gekennzeichnet, dass** die Drehwelle eine Drehwelle ist, die eine Tischeinrichtung drehbar lagert, die an einer zur Achse der Drehwelle versetzten Position vorgesehen ist und auf der in einem Indexer ein Werkstück abnehmbar angebracht ist.

5. Drehwellen-Ausgleichsmechanismus (8) zum Verringern des auf eine durch ein Wellenlagerungselement drehbar gelagerte Drehwelle (3) von einem oder mehreren durch die Drehwelle gelagerten Elemente wirkenden Drehmoments, welcher umfasst:
eine Gasfeder (20) zum Anlegen eines ausgleichenden Drehmoments an der Drehwelle, das mindestens teilweise das Drehmoment aufhebt;
einen Kupplungsarm (56), der die Gasfeder aufweist und mittels der Gasfeder aus- und einfahrbar ist;
ein erstes Verbindungsstück (40), das ein Ende des Kupplungsarms mit einem feststehenden Element (10) an dem Wellenlagerungselement drehbar verbindet; und
ein zweites Verbindungsstück (45), das das andere Ende des Kupplungsarms entweder mit einem Ende der Drehwelle oder mit einem Drehelement drehbar verbindet, das an dem Ende der Drehwelle an einer zur Achse der Drehwelle versetzten Position befestigt ist.

## Revendications

1. Mécanisme d'équilibrage d'arbre rotatif (8) pour réduire un moment de rotation agissant sur un arbre rotatif (3) supporté en rotation par un élément de support d'arbre à partir d'un ou plusieurs éléments supportés par l'arbre rotatif, comprenant :
un ressort à gaz (20) pour appliquer à l'arbre rotatif un moment de rotation d'équilibrage qui annule au moins partiellement le moment de rotation ;
un premier coupleur (40) qui accouple en rotation une extrémité du ressort à gaz à un élément stationnaire (10) sur l'élément de support d'arbre ; et
un second coupleur (45) qui accouple en rotation l'autre extrémité du ressort à gaz soit à une extrémité de l'arbre rotatif soit à un élément rotatif fixé à l'extrémité de l'arbre rotatif dans une position décalée par rapport à un axe de l'arbre rotatif.

2. Mécanisme d'équilibrage d'arbre rotatif selon la revendication 1, **caractérisé par le fait que** l'axe de l'arbre rotatif, l'axe de rotation du premier coupleur et l'axe de rotation du second coupleur sont parallèles.

3. Mécanisme d'équilibrage d'arbre rotatif selon la revendication 2, **caractérisé par le fait que** le second coupleur est muni d'un arbre d'accouplement faisant saillie depuis l'extrémité de l'arbre rotatif ou de l'élément rotatif parallèlement à l'axe de l'arbre rotatif, et l'autre extrémité du ressort à gaz est accouplée en rotation par l'arbre rotatif ou par l'élément rotatif via l'arbre d'accouplement.

4. Mécanisme d'équilibrage d'arbre rotatif selon l'une quelconque des revendications 1 à 3, **caractérisé par le fait que** l'arbre rotatif est un arbre rotatif supportant en rotation une unité de table disposée dans une position décalée par rapport à l'axe de l'arbre rotatif et sur laquelle une pièce est montée de manière amovible dans un indexeur.

5. Mécanisme d'équilibrage d'arbre rotatif (8) pour réduire un moment de rotation agissant sur un arbre rotatif (3) supporté en rotation par un élément de support d'arbre à partir d'un ou plusieurs éléments supportés par l'arbre rotatif, comprenant :
un ressort à gaz (20) pour appliquer un moment de rotation d'équilibrage à l'arbre rotatif qui annule au moins partiellement le moment de rotation ;
un bras d'accouplement (56) que comporte le ressort à gaz et qui peut se détendre et se contracter via le ressort à gaz ;
un premier coupleur (40) qui accouple en rotation une extrémité du bras d'accouplement à un élément stationnaire (10) sur l'élément de support d'arbre ; et
un second coupleur (45) qui accouple en rotation l'autre extrémité du bras d'accouplement soit à une extrémité de l'arbre rotatif soit à un élément rotatif fixé à l'extrémité de l'arbre rotatif dans une position décalée par rapport à l'axe de l'arbre rotatif.
